(19) Europäisches Patentamt
European Patent Office
Office européen des brevets

(11) **EP 3 989 126 B1**

(12) **EUROPEAN PATENT SPECIFICATION**

(45) Date of publication and mention
of the grant of the patent:
**26.07.2023 Bulletin 2023/30**

(21) Application number: **21203776.6**

(22) Date of filing: **20.10.2021**

(51) International Patent Classification (IPC):
**G06N 3/045** *(2023.01)*  **G06N 3/0464** *(2023.01)*
**G06N 3/09** *(2023.01)*  **G01T 1/36** *(2006.01)*

(52) Cooperative Patent Classification (CPC):
**G01T 1/36; G06N 3/045; G06N 3/0464; G06N 3/09; G06N 3/047**

(54) **METHOD FOR THE AUTOMATIC IDENTIFICATION AND QUANTIFICATION OF RADIOISOTOPES IN GAMMA SPECTRA**

VERFAHREN FÜR DIE AUTOMATISCHE IDENTIFIZIERUNG UND QUANTIFIZIERUNG VON RADIOISOTOPEN IN GAMMASPEKTREN

MÉTHODE POUR L'IDENTIFICATION ET LA QUANTIFICATION AUTOMATIQUES DES RADIO-ISOTOPES DANS LES SPECTRES GAMMA

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.10.2020 IT 202000025006**

(43) Date of publication of application:
**27.04.2022 Bulletin 2022/17**

(73) Proprietors:
• **Consiglio Nazionale Delle Ricerche**
**00185 Roma (IT)**
• **Due2Lab S.r.l.**
**42019 Scandiano (RE) (IT)**

(72) Inventors:
• **SARZI AMADÈ, Nicola**
**00185 Roma (IT)**
• **BETTELLI, Manuele**
**00185 ROMA (IT)**
• **ZAPPETTINI, Andrea**
**00185 ROMA (IT)**
• **ZAMBELLI, Nicola**
**43121 PARMA (IT)**

(74) Representative: **Perronace, Andrea et al**
**Jacobacci & Partners S.p.A.**
**Via Tomacelli, 146**
**00186 Roma (IT)**

(56) References cited:
• **KAMUDA MARK ET AL: "A comparison of machine learning methods for automated gamma-ray spectroscopy", NUCLEAR INSTRUMENTS & METHODS IN PHYSICS RESEARCH. SECTION A, ELSEVIER BV * NORTH-HOLLAND, NL, vol. 954, 19 October 2018 (2018-10-19), XP085992746, ISSN: 0168-9002, DOI: 10.1016/J.NIMA.2018.10.063 [retrieved on 2018-10-19]**
• **Anonymous: "What is a multi-headed model? And what exactly is a 'head' in a model?", , 6 May 2019 (2019-05-06), pages 1-2, XP055759142, Retrieved from the Internet: URL:https://stackoverflow.com/questions/56 004483/what-is-a-multi-headed-model-and-wh at-exactly-is-a-head-in-a-model [retrieved on 2020-12-11]**

## Description

The present invention relates to a method for the automatic identification and quantification of radioisotopes, e.g. in low resolution gamma spectra, based on convolutional neural networks densely connected in directed acyclic graph.

## Background art

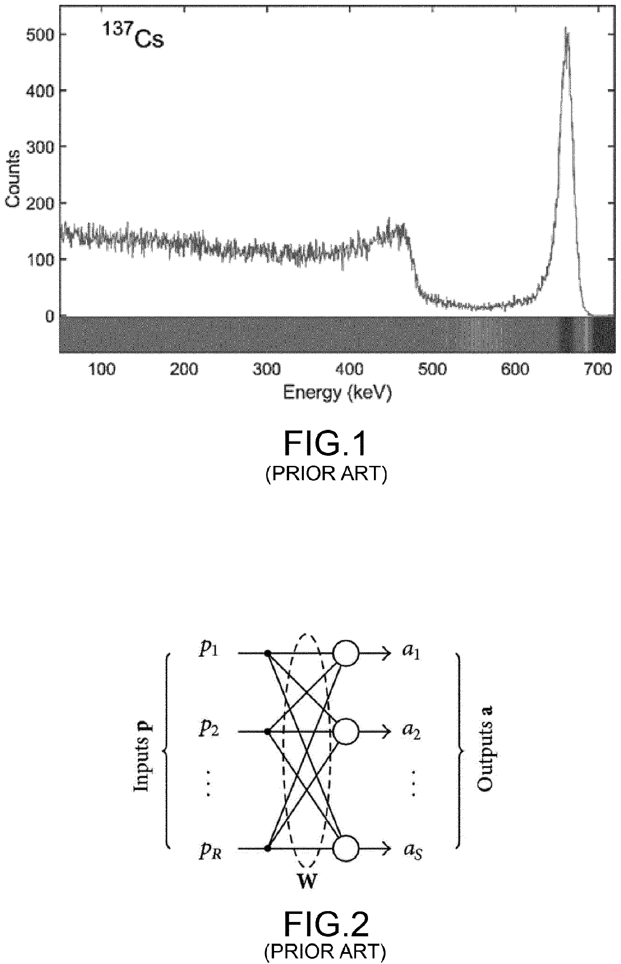

With reference to Figure 1, a gamma spectrum of an isotope can be considered as a one-dimensional image in which each channel corresponds to a pixel. Photo-peaks, Compton shoulders, regions in which the signal is constant and others in which it is null (attributes) univocally determine the isotope, which generated it.

Starting from these physical features, it was attempted to automatically recognize the presence of specific isotopes in gamma spectra.

In this respect, for the prior art reference is made to a recent review containing all of the pertinent references related to the previously consolidated methods of isotope identification in gamma spectra [1].

The consolidated approaches can be grouped into two macro-categories: "peak search and match" and "template matching".

In the first method, the first step consists in identifying the peaks present in the spectrum, which correspond to the characteristic emissions of the isotope. Such a process is not trivial on spectra with a low number of events and with modest energy resolutions as statistical fluctuations and broad peaks can prevent a small signal from being distinguished from noise. In the second step, determined numeric attributes are calculated from the initial spectrum (e.g. area of each peak). The quality and number of attributes selected is fundamental for performing the subsequent task of classification (probability of the presence of the recognized element) in an accurate manner and in reasonable times. These results are used to select the correct solution in an existing library by means of a comparison. The dimension and quality of the library are crucial as it is always necessary to reach a compromise between speed and accuracy. There are various classification algorithms (decision trees, neural networks, Naive Bayes, Nearest Neighbor, Support vector machines, the neural networks being used here merely for the purposes of classification downstream of the extraction of features with inexperienced methods and algorithms) and the choice of which to use depends on the previous steps.

The second method consists in constructing a library of isotopes in various configurations. An algorithm searches for the best combination of solutions present in the library, which best reproduce the spectrum. In order to overcome the combinatory problem, the algorithms vary and can be divided into heuristic and systematic. The drawback of this approach is that the library must be representative of the detection system used. Even slight distortions mislead the matching algorithm (e.g. statistical noise or the presence of absorber materials).

Recently, algorithms based on artificial neural networks (ANN) combined with other methods have appeared in this scenario, both in scientific publications (e.g. [2,3,5]) and as patents ([6-9]). This category differs from the previous ones in that the comparison with the library is not made for each new measurement: once trained, the network is capable of providing the response immediately. The patents of this type suggested so far are limited to classification or identification, i.e. they determine the probability of a radioisotope being present or absent. Furthermore, the analysis with the ANNs is always preceded by a data pre-processing step to remove noise and reduce the dimensionality of the problem.

A method is also known from publication [10], which uses algorithms for recognizing patterns, such as the artificial neural networks (NN) and the convolution neural networks (CNNs) to carry out the automated gamma-ray spectroscopy. How these patterns train and operate imitates how the trained spectroscopists identify spectra. These patterns have shown promising results in identifying gamma-ray spectra with a wide calibration drift and unknown background radiation fields.

In this scenario, a need remains for a method capable of quantifying the fraction of each isotope detected. Furthermore, there is felt a need for a method capable of eliminating the preliminary step of reducing the dimensionality of the problem, as well as the step of smoothing the incoming data, the whole at a speed which is obtainable with portable personal devices, such as smartphones or personal computers. Another need is to have a method for recognizing and quantifying isotopes, which can be trained using both experimental measures and simulations.

## Purpose and object of the invention

It is the object of the invention to provide a method for the automatic identification and quantification of radioisotopes in low resolution gamma spectra, which at least partially solves the problems and overcomes the drawbacks of the prior art.

A method according to the appended claims is the subject of the present invention.

## Detailed description of embodiments of the invention

### List of drawings

The invention will now be described by way of nonlimiting example, with particular reference to the figures in the accompanying drawings, in which:

- figure 1 shows a one-dimensional gamma spectrum of an isotope $^{137}$Cs;
- figure 2 shows a structure of a purely linear network according to the prior art;
- figure 3 shows a structure of a convolutional neural network, which is densely connected, according to the prior art;
- figure 4 shows an example of a directed acyclic graph, according to the prior art;
- figure 5 shows an example of expert algorithm architecture used in the method according to the invention;

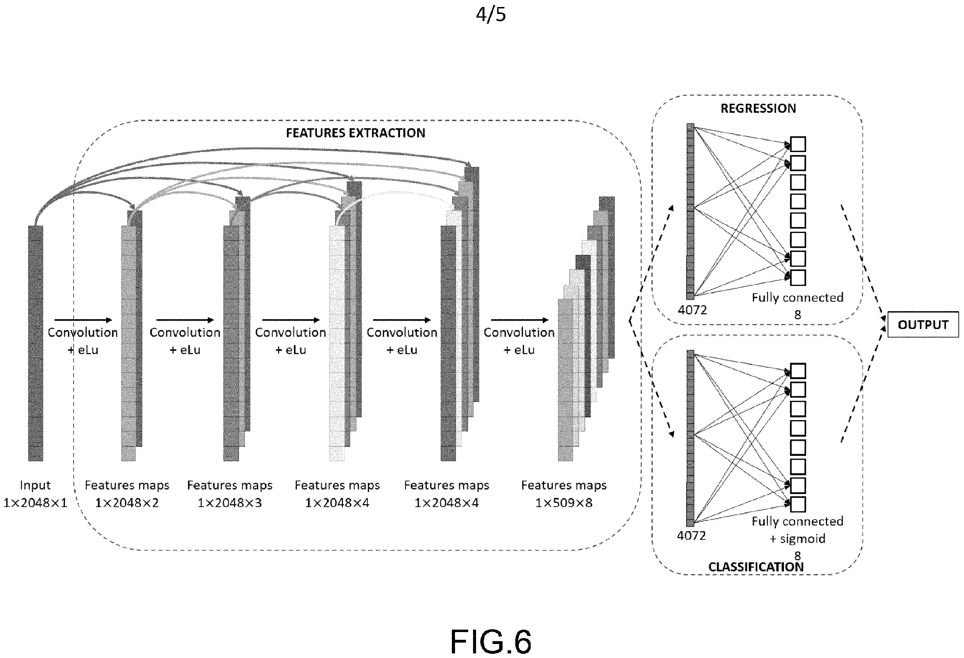

- figure 6 shows an exemplary diagram of the architecture according to an embodiment of the invention;

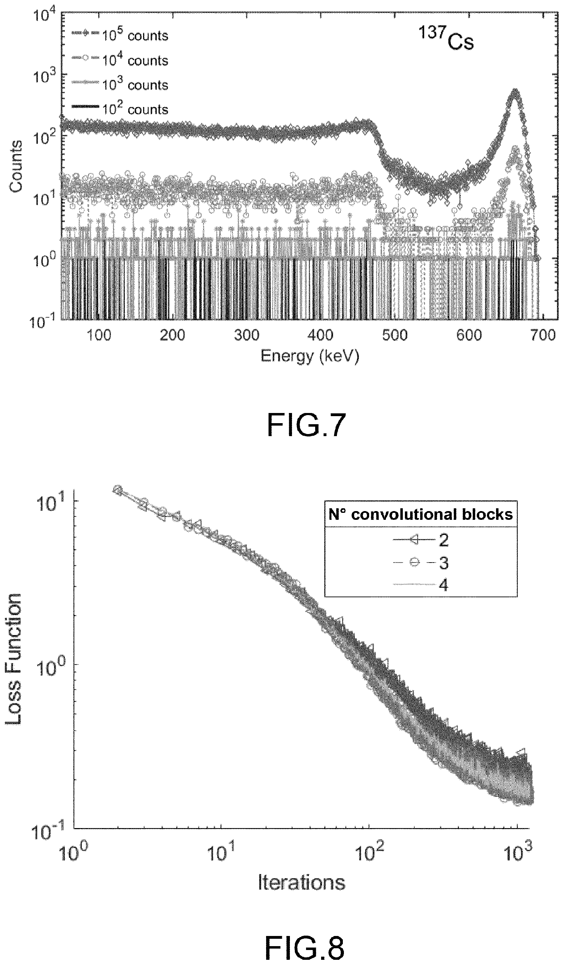

- figure 7 shows an example of spectra of the isotope $^{137}$Cs with different statistics: spectra $10^{3\text{-}4\text{-}5}$ were used for the training, then the network according to the invention was tested on the spectrum $10^2$; and
- figure 8 shows the trend of the cost function as a function of the iteration number for networks with a different number of convolutional blocks.

When an element is introduced, it is always understood that there may be "at least one" or "one or more".

When elements or features are listed in this description, it is understood that the finding according to the invention "comprises" or alternately "consists of" such elements.

### Embodiments

The identification method of the invention is based, *inter alia,* on convolutional neural networks (CNNs), an algorithm known *per se* and highly powerful in analyzing and recognizing images as it is capable of capturing, in an image, attributes of a local character (shapes, outlines, colors, etc.) irrespective of where they are therein and the identification thereof is invariant to small transformations, distortions, and translations.

### Physical and mathematical problem

The physical and mathematical problem faced by the inventors in view of isotopic recognition in a gamma spectrum was set as follows.

A measured gamma spectrum, generated by various radioactive sources, can be considered as a linear combination $N_c$ of the spectra generated by each single source. If $N_c$ is the number of channels forming the spectrum and $N_i$ the number of possibly identifiable isotopes, the measured spectrum can be expressed according to the relation:

$$\begin{pmatrix} c_1 \\ c_2 \\ \vdots \\ c_i \\ \vdots \\ c_{N_c} \end{pmatrix} = \begin{pmatrix} a_{11} & \cdots & a_{1N_i} \\ \vdots & & \vdots \\ a_{i1} & \ddots & a_{N_i 1} \\ \vdots & & \vdots \\ a_{N_c 1} & \cdots & a_{N_c N_i} \end{pmatrix} \begin{pmatrix} w_1 \\ \vdots \\ w_j \\ \vdots \\ w_{N_i} \end{pmatrix}$$

or

$$\vec{c} = \hat{a} \cdot \vec{w}$$

where $c_i$ is the number of counts in the $i$-th channel, $w_j$ is the weight or coefficient of the $j$-th isotope, and $\hat{a}$ is the matrix which describes how the detector responds in the presence of a given radioisotope. In essence, the $j$-th column of $\hat{a}$ represents the ideal spectrum that the detector would measure in the presence of the $j$-th isotope. The problem of identifying the isotopes present in the measured spectrum and quantifying the fraction thereof thus consists in inverting the Equation (1) and obtaining the weights from the measured spectrum.

However, since the matrix $\hat{a}$ is hardly invertible, the problem is unstable to slight fluctuations, which lead to results devoid of physical sense, such as, for example, negative or huge weights, due to the presence of statistical noise in the measurement. Instead of inverting $\hat{a}$, it is possible to fit the inverse thereof, using experimental measurements in which the actual weight of each isotope present in each one is known.

One way of doing this is to use a neural network with the following architecture (see Fig. 1): input layer with $N_c$ neurons, no hidden layer, and an output layer with $N_i$ neurons without activation functions. Each neuron of the output layer thus linearly combines the counts of each channel, and therefore the weights obtained by training are, in all respects, the elements of the inverse matrix of $\hat{a}$.

The problem is that this architecture has great limitations. The absence of non-linearity prevents the insertion of hidden layers as they would be redundant (linear combinations of linear combinations) and this leads to a maximum number of trainable parameters (given by the product $N_c \cdot N_i$) and to limited predictive capacities (networks with linear activation functions cannot reproduce any function, unlike a multi-layer network with non-linearity).

For this reason, according to the invention, it is advantageous to regularize the problem or reduce the dimensionality thereof, for example by identifying which isotopes are actually present and only calculate the weights for those. In fact, the problem of identifying isotopes in a gamma spectrum is simpler, although not trivial: the presence of determined features or attributes in the measured spectrum (for example, position of the peaks) automatically identifies which isotope generated it, and therefore the problem is transferred to the capacity to identify and recognize such attributes ("peak searching", "template matching"), without any quantitative analysis for each one of them.

Therefore, the problem was split by the inventors into two problems: identifying the isotopes present (classification in terms of probability); quantifying the fraction of each one (regression).

Neural networks generally perform only one of such tasks, while the invention achieves both, with techniques adopted for 1) efficiently extracting the relevant information from the spectrum measured and 2) efficiently combining the information related to the identification in order to obtain the quantification.

Reasons for using a convolutional neural network (CNN) with respect to a standard one

The first obstacle of the above problem is the specific nature of the raw data. A measured gamma spectrum is affected by statistical noise. Therefore, the first step generally is that of smoothing, which limits the statistical fluctuations but, in the case of too noisy measurements, it can introduce artifacts. Furthermore, the spectrum generally consists of a few thousand channels. Such an amount of starting data is high for a standard multi-layer network, which would require several layers with a comparable number of neurons for the analysis, thus achieving a trainable number of parameters even equal to $\sim 10^6$.

Therefore, a first appropriate action according to the invention is to reduce the dimensionality to reduce the complexity of the problem using various possible methods. Such a reduction in dimensionality, as will be seen, will be different from that of the prior art, because convolutional networks are trainable with respect to the so-called hyperparameters and not because the dimensionality of the incoming datum is reduced.

Finally, the last limit of a network, as usually applied to the general problem of the invention, consists in <u>not</u> considering the spatial relationships between the input data: if the channels of the dataset spectra were all remixed in the same manner, the training would not suffer from positive or negative consequences. This is a waste of resources and misuse of the information because the network must learn again which relation exists between the various input data, wherever placed, when this information is already available: in fact, in the case of gamma spectra, if a sequence of channels forms a peak, it is important, according to the inventors, to assess the whole sequence and, that is, also to consider the local neighborhood of each channel.

After posing the problem so, the inventors agreed that the best candidate for solving both problems would be the convolutional neural networks. Since the parameters of the convolutional filters are trained, it does not matter how long the input sequence is: the number of parameters remains unchanged. With equal parameters, this allows creating deeper networks and with more layers, thus increasing the abstraction power of the network, without needing to perform a pre-processing of any kind of the raw spectrum. Furthermore, by assessing portions or segments of data at a time, it is possible to extract the relevant attributes present in the various zones of the spectrum in an invariant manner by translation and scale (typical feature of CNNs) .

Finally, the number of parameters for training a convolutional network, which has input 1D images of a few thousand pixels, is highly limited ($\sim 10^4$), thus facilitating the learning thereof, even on datasets of modest dimensions.

In short, according to the assessments of the Inventors, the choice of the CNNs in the application for recognizing radioisotopes in gamma spectra would have allowed (as later demonstrated, see below) an effective extraction of the relevant attributes directly from the raw measurement (therefore without loss of information given by the compression and without introducing possible artifacts), using few parameters and in a robust manner as compared to distortions given by the statistical noise. This was considered to be the first block of the network of the invention, technically referred to as *"features extraction"*.

Reason for using "densely connected CNNs"

The main limit in the construction of deep networks lies in the propagation of the information through the various layers. In the case of CNNs, each new convolutional block must re-learn what is relevant from what is not as it only has access to the output data of the previous block. Recently, the technique of connecting the output of each convolutional block to the input of every other one (densely connected CNN) was suggested, as shown in Fig. 2.

Even if the number of connections and relationships between the layers increases, this type of networks requires fewer parameters and favors the re-use of data extracted at each block, ensuring a more compact and accurate learning with fewer problems of overfitting and without degrading performance for deeper networks. For an in-depth analysis on this matter, see the article at the following link: https://openaccess.thecvf.com/content cvpr 2017/papers/ Huang Densely Connected Convolutional CVPR 2017 paper.p df.

In the context of the identification of isotopes of the present invention, the DC-CNNs are a contrivance for strengthening the learning of the network, reducing the number of parameters thereof, and avoiding the "overfitting".

Reason for using multi-objective neural networks

Following the features extraction, according to the invention, the network must perform the tasks of regression and classification (probability of presence, normally varying from 0 to 1) to solve the two problems stated above in the application of recognizing and quantifying isotopes.

According to the invention, it is possible to bifurcate the network and assign an objective to each branch. The regression part can be structured according to the previous description (see above in relation to the formula $\vec{c} = \hat{a} \cdot \vec{w}$): the data exiting the convolutional part is linearly combined and outputs, in turn, a coefficient for each identifiable isotope (quantification); this is the only structure which allows the network to conceive the input data as overlap or linear combination, thus the quantification branch according to the invention is without activation functions. With respect to the application of this approach directly to the raw spectrum, now the information has been processed and the effect of the distortions is attenuated, although not eliminated.

The second branch is structured in the same manner (input and output with the same number of neurons as the other branch) with the difference that a step-like activation function is applied to each neuron of the output layer (with a number of neurons equal to the number of isotopes), which grows quickly from the minimum value to the maximum value, the output of which represents the probability that that isotope is present (sigmoidal function). This is defined as *"multi-label classification"* as, for each isotope, a value released from the others is obtained: they can all be present or they can all be absent. Unlike the activation functions such as SoftMax, in the case of the invention, it is not necessary to identify at least one class. This is important if, in the measured spectrum, an isotope is present, for which the network has not been trained, which network will thus return null values, avoiding identification errors.

In essence, the same information is processed by two different networks (multi-objective architecture), obtaining two values for each isotope: the weight and the probability that it is present. In order to process both pieces of information, the bifurcation converges into a single node: the negative weights or the weights of the isotopes, the probability of which is less than a certain threshold, are disregarded and the remaining ones are conveniently normalized so as to finally obtain a vector of numbers with a length equal to the number of isotopes the sum of which is unitary.

Directed acyclic graph (DAG) structure

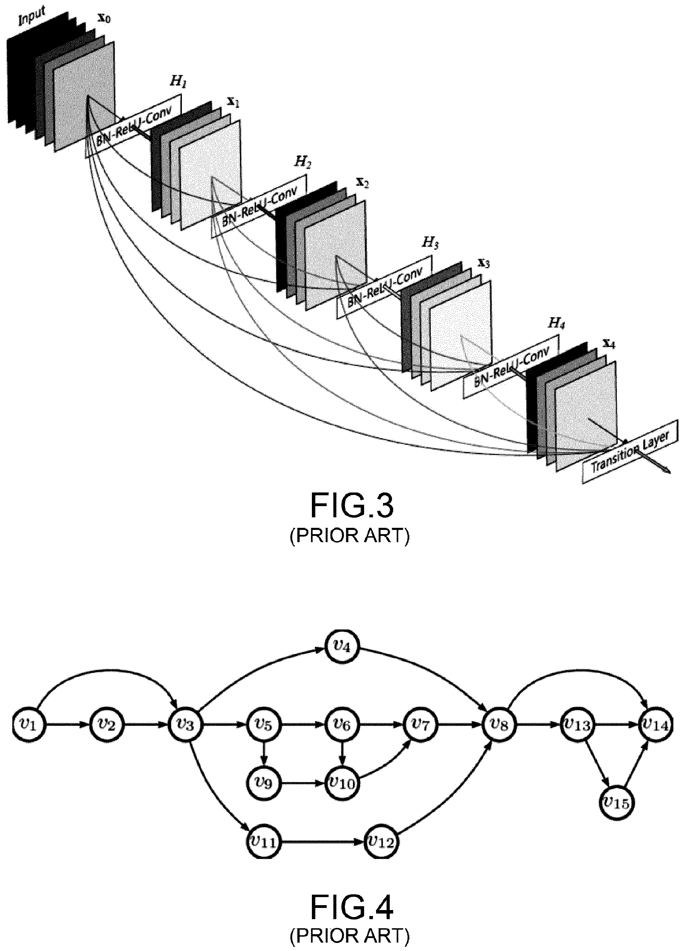

In practice, according to the invention, in order to achieve the structure of the DC-CNN and the multi-objective networks, as outlines above, according to the invention, the topology of the directed acyclic graphs is used (see Fig. 3). This means that each layer is always and only connected to one or more subsequent layers, never to preceding layers. This allows more complex networks to be constructed, with multiple branches and connections both at the input and at the output, even skipping full blocks, as described in the previous cases.

Final architecture according to the invention

The basic ingredients for performing the identification and quantification of isotopes have been described in the previous sections. The final architecture, obtained after several trials and errors, is shown and described in detail. However, it is worth pointing out that a different number of convolutional blocks, different numbers of filters having different dimensions, can however perform the task.

In a specific embodiment, the input layer corresponds to a vector with a predetermined number of channels for acquiring the spectroscopic image, e.g. equal to 2048 (number set based on the typical data of the analyzed gamma spectra). The counts are normalized so that the area of the spectrum is unitary.

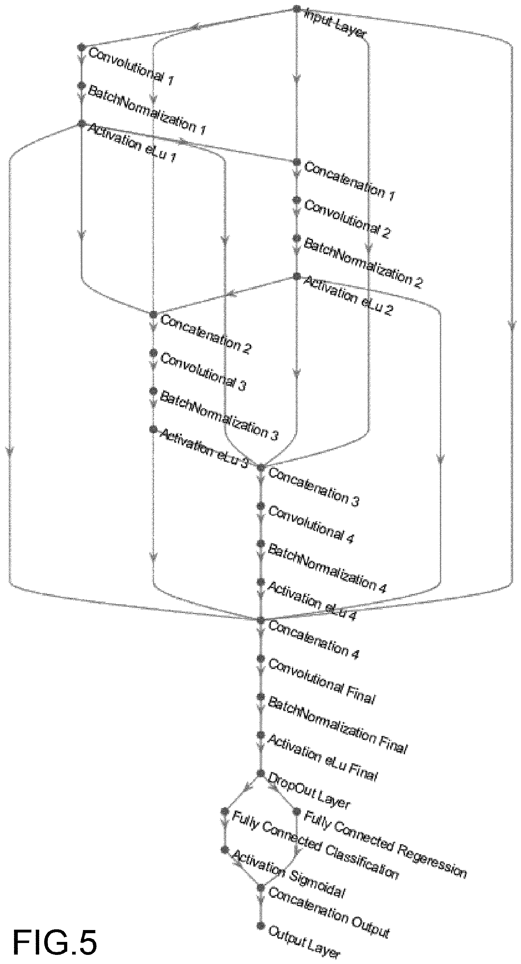

With reference to Fig. 5, the first convolutional block (Convolutional 1) applies a filter with dimensions $1 \times 24$ to

the input spectrum, to which 23 zeroes are added at the end so that it returns a vector having identical dimensions to the starting one (*"zero padding"*).

Optionally, a batch normalization (Batch Normalization 1 layer) is then carried out, a well-known technique for reducing sensitivity at initialization of the parameters of the network and commonly used between the convolutional layer and the activation functions. It consists in re-scaling and re-centering each input of a mini-batch.

The one non-linear activation function is then applied, advantageously the ELU function (exponential linear unit - Activation eLu 1), to each element; the non-linearity has a similar function to the standard networks and facilitates the extraction of the attributes.

On the other hand, the absence of the typical pooling layer is a merely simplifying choice: it has been shown in literature that it is possible to attain equally optimum results without it (*"all convolutional net"* https://arxiv.org/abs/1412.6806) therefore, without having to calibrate the hyper-parameters linked to the pooling, which, in this case, would not even be mandatory as it is not necessary to compress the data: the dimensionality must remain unaltered to concatenate the layers.

In all, various convolutional blocks equal to the first one already described can be present (filter $1\times24$ (e.g. 4 convolutional blocks), zero padding of 23 zeroes, batch-normalization and ELU function) but each block is connected to all of the subsequent ones and the outputs are conveniently concatenated.

This gives, progressively in the specific case shown, vectors of $1\times2048\times2$, $1\times2048\times3$, $1\times2048\times4$ e $1\times2048\times5$ as input with each convolutional layer (Convolutional 1, Convolutional 2, Convolutional 3, and Convolutional 4 in Fig. 5) but which always returns a vector $1\times2048$. The final convolutional block (Convolution Final in Fig. 5) serves the function of condensing the information and it has 8 filters $1\times16$ with a pitch of 4 channels, finally obtaining a datum of $1\times509\times8$.

The subsequent dropout layer (Dropout Layer in Fig. 5, optional) has the sole purpose of preventing the overfitting, randomly "switching off" 500 of neurons with each iteration to build up the learning. At this point, the bifurcation leads to two completely connected layers of 8 neurons each (in general, a number N of possible isotopes), corresponding to each isotope. One of these is followed by a layer which applies a sigmoidal function to the output values so as to contain each one of these in the range [0,1].

The bifurcation comprises:

- a first branch with a classification neural network with a predetermined number of input neurons and a predetermined equal number of output neurons, equal to the identifiable number of isotopes, configured to apply a first non-linear activation function to each neuron; and

- a second branch with a quantification neural network with a number of input neurons and a predetermined number of output neurons, equal to the identifiable number of isotopes, configured to linearly combine the input data, apply a second linear activation function to each neuron, and output a quantification coefficient for each identifiable isotope.

The outputs of said first and said second branches are concatenated so as to provide a vector with a number of components equal to the identifiable isotopes and vector component values equal to the corresponding quantification coefficients normalized, the concatenation being performed after applying a first cost function to the first branch and a second cost function to the second branch.

The values of the two cost functions are combined (with sum or another appropriate operation) to provide a single cost value to be minimized in the training.

In the specific example, the output of both branches is concatenated (Concatenation Output, $1\times16$ output values) and processed by a specific, personalized cost function: a cost function is applied to the classification part, e.g. the cross-entropy loss function since it is a multi-class and multi-label problem (i.e. several isotopes can be present at the same time). Isotopes with a greater output than 0.5 or another threshold value are considered present (being a hyperparameter calibrated during the training).

The corresponding values of the regression part are compared with the real values by means of the sum of the square differences (second cost function) or other regression function.

The cost functions are calculated at the output from the bifurcation, in the "output layer" block in Fig. 5.

The total error is given by the sum of both cost functions. The overall number of parameters is 66084 in the specific illustrated case. For a quick comparison, just think that a purely linear network without hidden layers with 8 possible isotopes would consist of 16384 parameters. With only a factor 4 of difference, the architecture of this network allows managing problems of a completely different complexity.

Training

The dataset can consist of spectra with various statistics and number of isotopes actually present:

- Spectra with single isotope

  ▪ With 1000 counts

  ▪ With 10000 counts

  ▪ With 100000 counts

- With two isotopes at 1:1 ratio

  ▪ With 2·1000 counts
  ▪ With 2·10000 counts
  ▪ With 2·100000 counts

- With two isotopes at 3:1 and 1:3 ratio

  ▪ With 4·1000 counts
  ▪ With 4·10000 counts
  ▪ With 4·100000 counts

In the case of spectra with two isotopes, each possible combination of the eight possible isotopes of this example ($^{57}$Co, $^{60}$Co, $^{133}$Ba, $^{137}$Cs, $^{192}$Ir, $^{204}$Tl, $^{226}$Ra, $^{241}$Am) is considered. The whole dataset available (19320 spectra) has been divided as follows: 80% for training, 10% for validation, and 10% for verification.

In a specific case, mini-batches of 128 spectra have been created for the training with a learning rate of 0.001, and the updating of the parameters uses the Adam optimization algorithm. If the cost function on the validation dataset for 6 consecutive iterations does not improve, the training is stopped to prevent overfitting. On a standard single core laptop, such a training took about 20 min.

Results on the verification dataset

Shown below are the results on a verification dataset, which is not used for the training: each spectrum is "new" for the network. In relation to spectra with a single isotope, the network does not make mistakes and is always able to recognize the isotope regardless of the statistics, as per Table 1 shown below:

| | | Actual class | | | | | | | |
|---|---|---|---|---|---|---|---|---|---|
| | | $^{57}$Co | $^{60}$Co | $^{133}$Ba | $^{137}$Cs | $^{192}$Ir | $^{204}$Tl | $^{226}$Ra | $^{241}$Am |
| Predicted class | $^{57}$Co | 100 | 0 | 0 | 0 | 0 | 0 | 0 | 0 |
| | $^{60}$Co | 0 | 100 | 0 | 0 | 0 | 0 | 0 | 0 |
| | $^{133}$Ba | 0 | 0 | 100 | 0 | 0 | 0 | 0 | 0 |
| | $^{137}$Cs | 0 | 0 | 0 | 100 | 0 | 0 | 0 | 0 |
| | $^{192}$Ir | 0 | 0 | 0 | 0 | 100 | 0 | 0 | 0 |
| | $^{204}$Tl | 0 | 0 | 0 | 0 | 0 | 100 | 0 | 0 |
| | $^{226}$Ra | 0 | 0 | 0 | 0 | 0 | 0 | 100 | 0 |
| | $^{241}$Am | 0 | 0 | 0 | 0 | 0 | 0 | 0 | 100 |
| Not identified | | 0 | 0 | 0 | 0 | 0 | 0 | 0 | 0 |

Table 1. % results on the verification set for spectra with only one isotope with 103, 104 and 105 counts. The columns indicate which isotope is actually present, while the lines indicate the isotope identified.

An example of a raw output of the network for a spectrum of $^{57}Co$ with 1000 counts (lowest statistic used) is shown below:

| $^{57}Co$ | $^{60}Co$ | $^{137}Ba$ | $^{137}Cs$ | $^{192}Ir$ | $^{204}Tl$ | $^{226}Ra$ | $^{241}Am$ |
|---|---|---|---|---|---|---|---|
| 1 | 0.0044 | 0.0034 | 0.0043 | 0.0022 | 0.0181 | 0.0027 | 0.0377 |
| 0.986 | -0.1395 | 0.024 | 0.0498 | 0.0493 | 0.0752 | 0.0707 | -0.0557 |

The first line corresponds to the outputs of the classification branch, indicating that the probability is virtually null for each isotope except for $^{57}Co$. This allows only the first weight of the second line to be considered, disregarding the others.

As for spectra with two isotopes, instead of showing the values of each prediction, the average and standard deviation (in brackets) have been calculated for the weights of each combination of isotopes, even between different statistics (%), as in Tables 2-4 below.

Table 2. Average and standard deviation of the weights for spectra with two isotopes at 1:1 ratio

| 1:1 | $^{57}Co$ | $^{60}Co$ | $^{133}Ba$ | $^{137}Cs$ | $^{192}Ir$ | $^{204}Tl$ | $^{226}Ra$ | $^{241}Am$ |
|---|---|---|---|---|---|---|---|---|
| $^{57}Co+^{60}Co$ | 49(4) | 51(4) | 0 | 0 | 0 | 0 | 0 | 0 |
| $^{57}Co+^{133}Ba$ | 49(2) | 0 | 51(2) | 0 | 0 | 0 | 0 | 0 |
| $^{57}Co+^{137}Cs$ | 50(3) | 0 | 0 | 50(3) | 0 | 0 | 0 | 0 |
| $^{57}Co+^{192}Ir$ | 49(3) | 0 | 0 | 0 | 51(3) | 0 | 0 | 0 |
| $^{57}Co+^{204}Tl$ | 50(2) | 0 | 0 | 0 | 0 | 50(2) | 0 | 0 |
| $^{57}Co+^{226}Ra$ | 51(2) | 0 | 0 | 0 | 0 | 0 | 49(2) | 0 |
| $^{57}Co+^{241}Am$ | 51(3) | 0 | 0 | 0 | 0 | 0 | 0 | 49(3) |
| $^{60}Co+^{133}Ba$ | 0 | 51(3) | 49(3) | 0 | 0 | 0 | 0 | 0 |
| $^{60}Co+^{137}Cs$ | 0 | 51(5) | 0 | 49(5) | 0 | 0 | 0 | 0 |
| $^{60}Co+^{192}Ir$ | 0 | 51(3) | 0 | 0 | 49(3) | 0 | 0 | 0 |
| $^{60}Co+^{204}Tl$ | 0 | 52(4) | 0 | 0 | 0 | 48(4) | 0 | 0 |
| $^{60}Co+^{226}Ra$ | 0 | 53(5) | 0 | 0 | 0 | 0 | 47(5) | 0 |
| $^{60}Co+^{241}Am$ | 0 | 51(4) | 0 | 0 | 0 | 0 | 0 | 49(4) |
| $^{133}Ba+^{137}Cs$ | 0 | 0 | 49(3) | 51(3) | 0 | 0 | 0 | 0 |
| $^{133}Ba+^{192}Ir$ | 0 | 0 | 50(2) | 0 | 50(2) | 0 | 0 | 0 |
| $^{133}Ba+^{204}Tl$ | 0 | 0 | 52(2) | 0 | 0 | 48(2) | 0 | 0 |
| $^{133}Ba+^{226}Ra$ | 0 | 0 | 51(2) | 0 | 0 | 0 | 49(2) | 0 |
| $^{133}Ba+^{241}Am$ | 0 | 0 | 52(1) | 0 | 0 | 0 | 0 | 48(1) |
| $^{137}Cs+^{192}Ir$ | 0 | 0 | 0 | 51(4) | 49(4) | 0 | 0 | 0 |
| $^{137}Cs+^{204}Tl$ | 0 | 0 | 0 | 48(2) | 0 | 52(2) | 0 | 0 |
| $^{137}Cs+^{226}Ra$ | 0 | 0 | 0 | 50(3) | 0 | 0 | 50(3) | 0 |
| $^{137}Cs+^{241}Am$ | 0 | 0 | 0 | 49(2) | 0 | 0 | 0 | 51(2) |
| $^{192}Ir+^{204}Tl$ | 0 | 0 | 0 | 0 | 49(2) | 51(2) | 0 | 0 |
| $^{192}Ir+^{226}Ra$ | 0 | 0 | 0 | 0 | 51(2) | 0 | 49(2) | 0 |
| $^{192}Ir+^{241}Am$ | 0 | 0 | 0 | 0 | 49(2) | 0 | 0 | 51(2) |
| $^{204}Tl+^{226}Ra$ | 0 | 0 | 0 | 0 | 0 | 49(2) | 51(2) | 0 |
| $^{204}Tl+^{241}Am$ | 0 | 0 | 0 | 0 | 0 | 56(2) | 0 | 44(2) |
| $^{226}Ra+^{241}Am$ | 0 | 0 | 0 | 0 | 0 | 0 | 50(2) | 50(2) |

Table 3. Average and standard deviation of the weights for spectra with two isotopes at 3:1 ratio

| 3:1 | $^{57}$Co | $^{60}$Co | $^{133}$Ba | $^{137}$Cs | $^{192}$Ir | $^{204}$Tl | $^{226}$Ra | $^{241}$Am |
|---|---|---|---|---|---|---|---|---|
| $^{57}$Co+$^{60}$Co | 76(1) | 24(1) | 0 | 0 | 0 | 0 | 0 | 0 |
| $^{57}$Co+$^{133}$Ba | 75(1) | 0 | 25(1) | 0 | 0 | 0 | 0 | 0 |
| $^{57}$Co+$^{137}$Cs | 74(1) | 0 | 0 | 26(1) | 0 | 0 | 0 | 0 |
| $^{57}$Co+$^{192}$Ir | 75(1) | 0 | 0 | 0 | 25(1) | 0 | 0 | 0 |
| $^{57}$Co+$^{204}$Tl | 73(2) | 0 | 0 | 0 | 0 | 27(2) | 0 | 0 |
| $^{57}$Co+$^{226}$Ra | 77(1) | 0 | 0 | 0 | 0 | 0 | 23(1) | 0 |
| $^{57}$Co+$^{241}$Am | 72(3) | 0 | 0 | 0 | 0 | 0 | 0 | 28(3) |
| $^{60}$Co+$^{133}$Ba | 0 | 75(4) | 25(4) | 0 | 0 | 0 | 0 | 0 |
| $^{60}$Co+$^{137}$Cs | 0 | 73(2) | 0 | 27(2) | 0 | 0 | 0 | 0 |
| $^{60}$Co+$^{192}$Ir | 0 | 76(4) | 0 | 0 | 24(4) | 0 | 0 | 0 |
| $^{60}$Co+$^{204}$Tl | 0 | 76(3) | 0 | 0 | 0 | 24(3) | 0 | 0 |
| $^{60}$Co+$^{226}$Ra | 0 | 78(4) | 0 | 0 | 0 | 0 | 22(4) | 0 |
| $^{60}$Co+$^{241}$Am | 0 | 74(4) | 0 | 0 | 0 | 0 | 0 | 26(4) |
| $^{133}$Ba+$^{137}$Cs | 0 | 0 | 74(1) | 26(1) | 0 | 0 | 0 | 0 |
| $^{133}$Ba+$^{192}$Ir | 0 | 0 | 74(1) | 0 | 26(1) | 0 | 0 | 0 |
|  |  |  |  |  |  |  |  |  |
| $^{133}$Ba+$^{204}$Tl | 0 | 0 | 73(3) | 0 | 0 | 27(3) | 0 | 0 |
| $^{133}$Ba+$^{226}$Ra | 0 | 0 | 75(2) | 0 | 0 | 0 | 25(2) | 0 |
| $^{133}$Ba+$^{241}$Am | 0 | 0 | 78(2) | 0 | 0 | 0 | 0 | 22(2) |
| $^{137}$Cs+$^{192}$Ir | 0 | 0 | 0 | 75(3) | 25(3) | 0 | 0 | 0 |
| $^{137}$Cs+$^{204}$Tl | 0 | 0 | 0 | 75(3) | 0 | 25(3) | 0 | 0 |
| $^{137}$Cs+$^{226}$Ra | 0 | 0 | 0 | 78(4) | 0 | 0 | 22(4) | 0 |
| $^{137}$Cs+$^{241}$Am | 0 | 0 | 0 | 77(3) | 0 | 0 | 0 | 23(3) |
| $^{191}$Ir+$^{204}$Tl | 0 | 0 | 0 | 0 | 75(2) | 25(2) | 0 | 0 |
| $^{192}$Ir+$^{226}$Ra | 0 | 0 | 0 | 0 | 76(2) | 0 | 24(2) | 0 |
| $^{192}$Ir+$^{241}$Am | 0 | 0 | 0 | 0 | 77(3) | 0 | 0 | 23(3) |
| $^{204}$Tl+$^{226}$Ra | 0 | 0 | 0 | 0 | 0 | 72(2) | 28(2) | 0 |
| $^{204}$Tl+$^{241}$Am | 0 | 0 | 0 | 0 | 0 | 70(1) | 0 | 30(1) |
| $^{226}$Ra+$^{241}$Am | 0 | 0 | 0 | 0 | 0 | 0 | 73(2) | 27(2) |

Table 4. Average and standard deviation of the weights for spectra with two isotopes at 1:3 ratio

| 3:1 | $^{57}$Co | $^{60}$Co | $^{133}$Ba | $^{137}$Cs | $^{192}$Ir | $^{204}$Tl | $^{226}$Ra | $^{241}$Am |
|---|---|---|---|---|---|---|---|---|
| $^{57}$Co+$^{60}$Co | 23(3) | 77(3) | 0 | 0 | 0 | 0 | 0 | 0 |
| $^{57}$Co+$^{133}$Ba | 24(2) | 0 | 76(2) | 0 | 0 | 0 | 0 | 0 |
| $^{57}$Co+$^{137}$Cs | 24(2) | 0 | 0 | 76(2) | 0 | 0 | 0 | 0 |
| $^{57}$Co+$^{192}$Ir | 25(2) | 0 | 0 | 0 | 75(2) | 0 | 0 | 0 |
| $^{57}$Co+$^{204}$Tl | 27(1) | 0 | 0 | 0 | 0 | 73(1) | 0 | 0 |

(continued)

| 3:1 | $^{57}$Co | $^{60}$Co | $^{133}$Ba | $^{137}$Cs | $^{192}$Ir | $^{204}$Tl | $^{226}$Ra | $^{241}$Am |
|---|---|---|---|---|---|---|---|---|
| $^{57}$Co+$^{226}$Ra | 25(3) | 0 | 0 | 0 | 0 | 0 | 75(3) | 0 |
| $^{57}$Co+$^{241}$Am | 27(1) | 0 | 0 | 0 | 0 | 0 | 0 | 73(1) |
| $^{60}$Co+$^{133}$Ba | 0 | 25(1) | 75(2) | 0 | 0 | 0 | 0 | 0 |
| $^{60}$Co+$^{137}$Cs | 0 | 25(2) | 0 | 75(2) | 0 | 0 | 0 | 0 |
| $^{60}$Co+$^{192}$Ir | 0 | 24(1) | 0 | 0 | 76(1) | 0 | 0 | 0 |
| $^{60}$Co+$^{204}$Tl | 0 | 26(1) | 0 | 0 | 0 | 74(1) | 0 | 0 |
| $^{60}$Co+$^{226}$Ra | 0 | 25(1) | 0 | 0 | 0 | 0 | 75(1) | 0 |
| $^{60}$Co+$^{241}$Am | 0 | 25(1) | 0 | 0 | 0 | 0 | 0 | 75(1) |
| $^{133}$Ba+$^{137}$Cs | 0 | 0 | 26(3) | 74(1) | 0 | 0 | 0 | 0 |
| $^{133}$Ba+$^{192}$Ir | 0 | 0 | 27(2) | 0 | 73(1) | 0 | 0 | 0 |
| $^{133}$Ba+$^{204}$Tl | 0 | 0 | 27(1) | 0 | 0 | 73(1) | 0 | 0 |
| $^{133}$Ba+$^{226}$Ra | 0 | 0 | 26(2) | 0 | 0 | 0 | 74(1) | 0 |
| $^{133}$Ba+$^{241}$Am | 0 | 0 | 27(1) | 0 | 0 | 0 | 0 | 73(1) |
| $^{137}$Cs+$^{192}$Ir | 0 | 0 | 0 | 26(1) | 74(1) | 0 | 0 | 0 |
| $^{137}$C$_S$+$^{2M}$Tl | 0 | 0 | 0 | 26(1) | 0 | 74(1) | 0 | 0 |
| $^{137}$Cs+$^{226}$Ra | 0 | 0 | 0 | 26(1) | 0 | 0 | 74(1) | 0 |
| $^{137}$Cs+$^{241}$Am | 0 | 0 | 0 | 27(1) | 0 | 0 | 0 | 73(1) |
| $^{192}$I$_{IH}$-$^{204}$Tl | 0 | 0 | 0 | 0 | 25(1) | 75(1) | 0 | 0 |
| $^{192}$Ir+$^{226}$Ra | 0 | 0 | 0 | 0 | 26(1) | 0 | 74(1) | 0 |
| $^{192}$Ir+$^{241}$Am | 0 | 0 | 0 | 0 | 25(1) | 0 | 0 | 75(1) |
| $^{204}$Tl+$^{226}$Ra | 0 | 0 | 0 | 0 | 0 | 25(2) | 75(2) | 0 |
| $^{204}$Tl+$^{241}$Am | 0 | 0 | 0 | 0 | 0 | 30(2) | 0 | 70(2) |
| $^{226}$Ra+$^{241}$Am | 0 | 0 | 0 | 0 | 0 | 0 | 26(2) | 74(2) |

As can be seen immediately, the network always and only recognizes the isotopes actually present with considerable precision and reproducibility of the coefficients. An example of raw output for a spectrum with $^{57}$Co and $^{60}$Co at 1:1 ratio with 2000 counts is:

| $^{57}$Co | $^{60}$Co | $^{137}$Ba | $^{137}$Cs | $^{192}$Ir | $^{204}$Tl | $^{226}$Ra | $^{241}$Am |
|---|---|---|---|---|---|---|---|
| 1 | 1 | 0.0005 | 0.0016 | 0.0001 | 0.0004 | 0.0001 | 0.0011 |
| 0.533 | 0.53 | -0.037 | 0.018 | -0.122 | -0.121 | -0.087 | -0.134 |

The first line corresponds to the outputs of the classification branch indicating that the probability is virtually null for each isotope except for $^{57}$Co and $^{60}$Co. This allows only the first two weights of the second line to be considered, disregarding the others.

Results on further datasets not used for training

In order to demonstrate the potential of this approach, spectra belonging to different categories were submitted to the network: spectra with only one isotope with 100 counts (a smaller order of magnitude than the minimum value used for the training) and spectra with 3 isotopes at 1:1:1 ratio. In the first case, a dataset with 100 spectra per isotope was constructed. The number of times an isotope has been identified is shown in the following Table 5: the elements on the diagonal consist of correct predictions (the columns do not add up 100 because of the possibility of identifying more than one isotope).

| | | Actual class | | | | | | | |
|---|---|---|---|---|---|---|---|---|---|
| | | $^{57}$Co | $^{60}$Co | $^{133}$Ba | $^{137}$Cs | $^{192}$Ir | $^{204}$Tl | $^{226}$Ra | $^{241}$Am |
| Predicted class | $^{57}$Co | 100 | 4 | 0 | 0 | 1 | 0 | 0 | 0 |
| | $^{60}$Co | 0 | 99 | 0 | 0 | 1 | 0 | 0 | 0 |
| | $^{133}$Ba | 0 | 6 | 100 | 0 | 0 | 0 | 0 | 0 |
| | $^{137}$Cs | 0 | 10 | 0 | 100 | 6 | 0 | 0 | 0 |
| | $^{192}$Ir | 0 | 8 | 1 | 4 | 100 | 0 | 0 | 0 |
| | $^{204}$Tl | 0 | 0 | 2 | 3 | 0 | 100 | 4 | 2 |
| | $^{226}$Ra | 0 | 4 | 0 | 0 | 0 | 0 | 100 | 0 |
| | $^{241}$Am | 2 | 0 | 10 | 6 | 4 | 30 | 4 | 100 |
| Not identified | | 0 | 1 | 0 | 0 | 0 | 0 | 0 | 0 |

Table 5. % results for spectra with only one isotope with 100 counts (not used for training). The columns indicate which isotope is actually present, while the lines indicate the isotope (or isotopes) identified.

From this test, it follows that in 99.88% of cases, the algorithm is however capable of identifying which is the correct isotope, even though, because of the low statistics, it is the only isotope only in 86.38% of cases. In the remaining 13.5%, the network also identifies other isotopes. In only one case the network does not identify any isotope because the probability for each isotope does not exceed the threshold. An example of raw output in the case of a spectrum of $^{226}$Ra in which an error is made is shown below:

| $^{57}$Co | $^{60}$Co | $^{137}$Ba | $^{137}$Cs | $^{192}$Ir | $^{204}$Tl | $^{226}$Ra | $^{241}$Am |
|---|---|---|---|---|---|---|---|
| 0.0028 | 0.0038 | 0.0108 | 0.011 | 0.1526 | 0.0002 | 0.9999 | 0.7111 |
| 0.4 | -0.0773 | 0.0871 | 0.0564 | 0.3112 | -0.1898 | 0.5652 | 0.3859 |

In fact, since the probability of $^{241}$Am is greater than the threshold, it is considered present.

Table 6. Results for spectra with 3 isotopes at 1:1:1 ratio (not used for training).

| 1:1:1 | $^{57}$Co | $^{60}$Co | $^{133}$Ba | $^{137}$Cs | $^{192}$Ir | $^{204}$Tl | $^{226}$Ra | $^{241}$Am |
|---|---|---|---|---|---|---|---|---|
| $^{57}$Co+$^{60}$Co+$^{133}$Ba | 32(1) | 35(1) | 33(1) | 0 | 0 | 0 | 0 | 0 |
| $^{57}$Co+$^{60}$Co+$^{137}$Cs | 35(1) | 33(1) | 0 | 33(1) | 0 | 0 | 0 | 0 |
| $^{57}$Co+$^{60}$Co+$^{192}$Ir | 33(1) | 34(1) | 0 | 0 | 33(1) | 0 | 0 | 0 |
| $^{57}$Co+$^{60}$Co+$^{204}$Tl | 29(1) | 32(1) | 0 | 0 | 0 | 39(1) | 0 | 0 |
| $^{57}$Co+$^{60}$Co+$^{226}$Ra | 34(1) | 36(1) | 0 | 0 | 0 | 0 | 31(1) | 0 |
| $^{57}$Co+$^{60}$Co+$^{241}$Am | 32(1) | 34(1) | 0 | 0 | 0 | 0 | 0 | 34(1) |
| $^{57}$Co+$^{133}$Ba+$^{137}$Cs | 31(1) | 0 | 33(1) | 36(1) | 0 | 0 | 0 | 0 |
| $^{57}$Co+$^{133}$Ba+$^{192}$Ir | 32(1) | 0 | 33(1) | 0 | 35(1) | 42(1) | 0 | 0 |
| $^{57}$Co+$^{133}$Ba+$^{204}$Tl | 31(1) | 0 | 28(1) | 0 | 0 | 0 | 31(1) | 0 |
| $^{57}$Co+$^{133}$Ba+$^{226}$Ra | 36(1) | 0 | 33(1) | 0 | 0 | 0 | 0 | 0 |
| $^{57}$Co+$^{133}$Ba+$^{241}$Am | 52(1) | 0 | 48(1) | 0 | 0 | 0 | 0 | 0 |
| $^{57}$Co+$^{137}$Cs+$^{192}$Ir | 34(1) | 0 | 0 | 33(1) | 33(1) | 0 | 0 | 0 |

(continued)

| 1:1:1 | $^{57}$Co | $^{60}$Co | $^{133}$Ba | $^{137}$Cs | $^{192}$Ir | $^{204}$Tl | $^{226}$Ra | $^{241}$Am |
|---|---|---|---|---|---|---|---|---|
| $^{57}$Co+$^{137}$Cs+$^{204}$Tl | 28(1) | 0 | 0 | 33(1) | 0 | 39(1) | 0 | 0 |
| $^{57}$Co+$^{137}$Cs+$^{226}$Ra | 32(1) | 0 | 0 | 37(1) | 0 | 0 | 30(1) | 0 |
| $^{57}$Co+$^{137}$Cs+$^{241}$Am | 31(1) | 0 | 0 | 35(1) | 0 | 0 | 0 | 34(1) |
| $^{57}$Co+$^{192}$Ir+$^{204}$Tl | 28(1) | 0 | 0 | 0 | 32(1) | 40(1) | 0 | 0 |
| $^{57}$Co+$^{192}$Ir+$^{226}$Ra | 33(1) | 0 | 0 | 0 | 36(1) | 0 | 31(1) | 0 |
| $^{57}$Co+$^{192}$Ir+$^{241}$Am | 32(1) | 0 | 0 | 0 | 34(1) | 0 | 0 | 35(1) |
| $^{57}$Co+$^{204}$Tl+$^{226}$Ra | 31(1) | 0 | 0 | 0 | 0 | 41(1) | 27(1) | 0 |
| $^{57}$Co+$^{204}$Tl+$^{241}$Am | 47(1) | 0 | 0 | 0 | 0 | 53(1) | 0 | 0 |
| $^{57}$Co+$^{226}$Ra+$^{241}$Am | 42(10) | 0 | 0 | 0 | 0 | 0 | 36(8) | 22(18) |
| $^{60}$Co+$^{133}$Ba+$^{137}$Cs | 0 | 33(1) | 33(1) | 34(1) | 0 | 0 | 0 | 0 |
| $^{60}$Co+$^{133}$Ba+$^{192}$Ir | 0 | 34(1) | 33(1) | 0 | 33(1) | 0 | 0 | 0 |
| $^{60}$Co+$^{133}$Ba+$^{204}$Tl | 0 | 32(1) | 29(1) | 0 | 0 | 39(1) | 0 | 0 |
| $^{60}$Co+$^{133}$Ba+$^{226}$Ra | 0 | 35(1) | 33(1) | 0 | 0 | 0 | 32(1) | 0 |
| $^{60}$Co+$^{133}$Ba+$^{241}$Am | 0 | 36(1) | 34(1) | 0 | 0 | 0 | 0 | 30(1) |
| $^{60}$Co+$^{137}$Cs+$^{192}$Ir | 0 | 34(1) | 0 | 34() | 32(1) | 0 | 0 | 0 |
| $^{60}$Co+$^{137}$Cs+$^{204}$Tl | 0 | 32(1) | 0 | 31() | 0 | 37(1) | 0 | 0 |
| $^{60}$Co+$^{137}$Cs+$^{226}$Ra | 0 | 34(1) | 0 | 33() | 0 | 0 | 33(1) | 0 |
| $^{60}$Co+$^{137}$Cs+$^{241}$Am | 0 | 32(1) | 0 | 310 | 0 | 0 | 0 | 36(1) |
| $^{60}$Co+$^{192}$Ir+$^{204}$Tl | 0 | 32(1) | 0 | 0 | 30(1) | 38(1) | 0 | 0 |
| $^{60}$Co+$^{192}$Ir+$^{226}$Ra | 0 | 35(1) | 0 | 0 | 32(1) | 0 | 33(1) | 0 |
| $^{60}$Co+$^{192}$Ir+$^{241}$Am | 0 | 34(1) | 0 | 0 | 31(1) | 0 | 0 | 35(1) |
| $^{60}$Co-$^{204}$Tl+$^{226}$Ra | 0 | 32(1) | 0 | 0 | 0 | 40(1) | 28(1) | 0 |
| $^{60}$Co+$^{204}$Tl+$^{241}$Am | 0 | 45(1) | 0 | 0 | 0 | 55(1) | 0 | 0 |
| $^{60}$Co+$^{226}$Ra+$^{241}$Am | 0 | 34(1) | 0 | 0 | 0 | 0 | 31(1) | 34(1) |
| $^{133}$Ba+$^{137}$Cs+$^{192}$Ir | 0 | 0 | 34(1) | 32(1) | 34(1) | 0 | 0 | 0 |
| $^{133}$Ba+$^{137}$Cs+$^{204}$Tl | 0 | 0 | 30(1) | 30(1) | 0 | 40(1) | 0 | 0 |
| $^{133}$Ba+$^{137}$Cs+$^{226}$Ra | 0 | 0 | 34(1) | 34(1) | 0 | 0 | 32(1) | 0 |
| $^{133}$Ba+$^{137}$Cs+$^{241}$Am | 0 | 0 | 35(1) | 36(1) | 0 | 0 | 0 | 29(1) |
| $^{133}$Ba+$^{192}$Ir+$^{204}$Tl | 0 | 0 | 29(1) | 0 | 30(1) | 41(1) | 0 | 0 |
| $^{133}$Ba+$^{192}$Ir+$^{226}$Ra | 0 | 0 | 34(1) | 0 | 33(1) | 0 | 33(1) | 0 |
| $^{133}$Ba+$^{192}$Ir+$^{241}$Am | 0 | 0 | 34(1) | 0 | 36(1) | 0 | 0 | 30(1) |
| $^{133}$Ba+$^{204}$Tl+$^{226}$Ra | 0 | 0 | 50(1) | 0 | 0 | 0 | 50 | 0 |
| $^{133}$Ba+$^{204}$Tl+$^{241}$Am | 0 | 0 | 41(1) | 0 | 0 | 59(1) | 0 | 0 |
| $^{133}$Ba+$^{226}$Ra+$^{241}$Am | 0 | 0 | 27(1) | 0 | 0 | | 28(1) | 45(1) |
| $^{137}$Cs+$^{192}$Ir+$^{204}$Tl | 0 | 0 | 0 | 30(1) | 31(1) | 39(1) | 0 | 0 |
| $^{137}$Cs+$^{192}$Ir+$^{226}$Ra | 0 | 0 | 0 | 34(1) | 34(1) | 0 | 32(1) | 0 |
| $^{137}$Cs+$^{192}$Ir+$^{241}$Am | 0 | 0 | 0 | 32(1) | 33(1) | | 0 | 36(1) |
| $^{137}$Cs+$^{204}$Tl+$^{226}$Ra | 0 | 0 | 0 | 32(1) | 0 | 40(1) | 29(1) | 0 |

(continued)

| 1:1:1 | 57Co | 60Co | 133Ba | 137Cs | 192Ir | 204Tl | 226Ra | 241Am |
|---|---|---|---|---|---|---|---|---|
| 137Cs+204Tl+241Am | 0 | 0 | 0 | 43(1) | 0 | 57(1) | 0 | 0 |
| 137Cs+226Ra+241Am | 0 | 0 | 0 | 34(1) | 0 | 0 | 32(1) | 34(1) |
| 192Ir+204Tl+226Ra | 0 | 0 | 0 | 0 | 29(1) | 41(1) | 30(1) | 0 |
| 192Ir+204Tl+241Am | 0 | 0 | 0 | 0 | 43(1) | 57(1) | 0 | 0 |
| 192Ir+226Ra+241Am | 0 | 0 | 0 | 0 | 33(1) | 0 | 35(1) | 33(1) |
| 204Tl+226Ra+241Am | 0 | 0 | 0 | 0 | 0 | 57(1) | 43(1) | 0 |

With reference to Table 6 above, surprisingly, the network behaves well, also in the case of spectra with 3 isotopes, identifying the correct ones and correctly estimating the weights, regardless of the statistics. However, in many cases, it only recognizes 2 out of 3 isotopes present, the relative fractions of which are however comparable. Using these spectra in training, clearly better results are obtained.

Need for a densely connected network

As already said, mutually connecting the convolutional blocks is a contrivance to improve the training and performance of the network, but it is not strictly necessary. Excellent results can also be obtained without, but worse than the version adopting this architecture, as shown in the following Table 7 in which errors are also present on the spectra with a single isotope.

| | | Actual class | | | | | | | |
|---|---|---|---|---|---|---|---|---|---|
| | | 57Co | 60Co | 133Ba | 137Cs | 192Ir | 204Tl | 226Ra | 241Am |
| Predicted class | 57Co | 100 | 0 | 0 | 0 | 0 | 0 | 0 | 0 |
| | 60Co | 0 | 100 | 0 | 0 | 0 | 0 | 0 | 19 |
| | 133Ba | 0 | 0 | 100 | 0 | 0 | 0 | 0 | 10 |
| | 137Cs | 0 | 0 | 0 | 100 | 0 | 0 | 0 | 10 |
| | 192Ir | 0 | 0 | 0 | 0 | 100 | 0 | 0 | 0 |
| | 204Tl | 0 | 0 | 0 | 0 | 0 | 100 | 0 | 0 |
| | 226Ra | 0 | 0 | 0 | 0 | 0 | 0 | 100 | 0 |
| | 241Am | 0 | 0 | 0 | 0 | 0 | 0 | 0 | 100 |
| Not identified | | 0 | 0 | 0 | 0 | 0 | 0 | 0 | 0 |

Table 7. Results on the verification set for spectra with only one isotope with $10^3$, $10^4$ and $10^5$ counts for the non-densely connected version. The columns indicate which isotope is actually present, while the lines indicate the isotope (or isotopes) identified.

Need for a multi-objective network

The need for the classification branch is apparent from the examples previously shown: without filtering the weights with the probability that an isotope is present, the results are unpredictable with negative weights or weights comparable to those of the isotopes actually present.

Procedure of calibration of the hyper-parameters used in the network

The network structure has the following types of hyper-parameters:

 a) dimensions of the filters in the first densely connected convolutional part;
 b) number of convolutional blocks; and
 c) further final convolutional block.

The dimension of the filters is linked to the spatial extension of the features present in the image (for example, photo-peaks, Compton shoulders) and to the levels of noise present. On the one hand, the perceptive field of the convolutional block must not be too wide so as to identify details which may prove to be relevant in the subsequent analysis (regression and classification). On the other hand, if the statistical fluctuations are high, the network must not confuse such oscillations as features, and therefore the use of a wide filter attenuates this effect since a sufficiently extensive portion is examined to observe the overall trend of that region. Since this network has been conceived for use even on low-statistics spectra, the dimension of the filters is relatively large ($1\times24$) as compared to other CNN applications.
As for the dimensions of the filters in the first densely connected convolutional part, it was taken into account that by increasing the number of convolutional blocks, the abstraction capacities of the network increase, and therefore improved performance is obtained. However, networks with too many layers can suffer from the *"vanishing gradient problem"*, which is such that the updating of the weights is slower in the first layers of the network, resulting in increased training times and the convergence itself of the cost function can be problematic. At the same time, the increase in the number of trainable parameters implies the use of a wider dataset. As for all artificial neural networks, a compromise was made between all these factors and the optimum number of blocks identified is 4 (as shown below, but such a dimension is to be understood as optional).
The further final block responds to a precise need for optimization. The DC-CNN allow an improved propagation of the feature maps through the various layers of the network, but this means that the raw input spectrum is also analyzed by the subsequent blocks. Since the spectrum in hand can be very noisy, in order to avoid the processing of such a noisy spectrum, a further convolutional block was advantageously inserted, which processes the product of each previous block. By doing this, the overall amount of data is reduced, while facilitating the analysis of the two completely connected subsequent layers.

Results by varying the number of convolutional blocks

In order to compare the performance of the network by varying the number of convolutional blocks, the dataset containing spectra with 100 events (not used for the training) was selected. The reason for such a choice consists in highlighting not what the network learns, but what it is capable of generalizing. In fact, the trend of the cost function during the training does not exhibit any substantial differences by varying the number of convolutional blocks, and therefore practically comparable performance is obtained on the test dataset.
Using two convolutional blocks, the following results are obtained (see table 8):

 - Accuracy: 99.5%
 - False positives: 22.5%
 - Unidentified: 0.25%

| | | Actual class | | | | | | | |
|---|---|---|---|---|---|---|---|---|---|
| | | $^{57}$Co | $^{60}$Co | $^{133}$Ba | $^{137}$Cs | $^{192}$Ir | $^{204}$Tl | $^{226}$Ra | $^{241}$Am |
| Predicted class | $^{57}$Co | 100 | 6 | 0 | 0 | 2 | 0 | 0 | 0 |
| | $^{60}$Co | 0 | 96 | 0 | 1 | 0 | 0 | 0 | 0 |
| | $^{133}$Ba | 0 | 8 | 100 | 5 | 2 | 0 | 0 | 0 |
| | $^{137}$Cs | 0 | 19 | 0 | 100 | 0 | 0 | 0 | 0 |
| | $^{192}$Ir | 0 | 12 | 1 | 11 | 100 | 0 | 0 | 0 |
| | $^{204}$Tl | 0 | 13 | 0 | 13 | 0 | 100 | 1 | 0 |
| | $^{226}$Ra | 1 | 5 | 0 | 6 | 0 | 11 | 100 | 0 |
| | $^{241}$Am | 0 | 21 | 6 | 34 | 0 | 1 | 2 | 100 |
| Unidentified | | 0 | 2 | 0 | 0 | 0 | 0 | 0 | 0 |

Table 8. Results on the dataset containing spectra with 100 events (not used for training), using a network with two convolutional blocks.

Using three convolutional blocks, the following results are obtained (see table 9):

- Accuracy: 1000
- False positives: 21.25%
- Unidentified: 0%

| | | Actual class | | | | | | | |
|---|---|---|---|---|---|---|---|---|---|
| Predicted class | | $^{57}$Co | $^{60}$Co | $^{133}$Ba | $^{137}$Cs | $^{192}$Ir | $^{204}$Tl | $^{226}$Ra | $^{241}$Am |
| | $^{57}$Co | 100 | 0 | 0 | 0 | 0 | 0 | 0 | 0 |
| | $^{60}$Co | 0 | 100 | 0 | 48 | 3 | 0 | 0 | 0 |
| | $^{133}$Ba | 0 | 4 | 100 | 8 | 4 | 0 | 0 | 0 |
| | $^{137}$Cs | 0 | 14 | 4 | 100 | 42 | 0 | 0 | 0 |
| | $^{192}$Ir | 0 | 5 | 1 | 10 | 100 | 0 | 1 | 0 |
| | $^{204}$Tl | 0 | 0 | 22 | 0 | 0 | 100 | 1 | 0 |
| | $^{226}$Ra | 1 | 0 | 0 | 0 | 0 | 0 | 100 | 0 |
| | $^{241}$Am | 0 | 0 | 6 | 0 | 0 | 3 | 0 | 100 |
| Unidentified | | 0 | 0 | 0 | 0 | 0 | 0 | 0 | 0 |

Table 9. Results on the dataset containing spectra with 100 events (not used for training), using a network with three convolutional blocks.

Using four convolutional blocks, the following results are obtained (see table 10):

- Accuracy: 99.88%
- False positives: 140
- Unidentified: 0.125%

| Predicted class | Actual class | | | | | | | |
|---|---|---|---|---|---|---|---|---|
| | $^{57}$Co | $^{60}$Co | $^{133}$Ba | $^{137}$Cs | $^{192}$Ir | $^{204}$Tl | $^{226}$Ra | $^{241}$Am |
| $^{57}$Co | 100 | 4 | 0 | 0 | 1 | 0 | 0 | 0 |
| $^{60}$Co | 0 | 99 | 0 | 0 | 1 | 0 | 0 | 0 |
| $^{133}$Ba | 0 | 6 | 100 | 0 | 0 | 0 | 0 | 0 |
| $^{137}$Cs | 0 | 10 | 0 | 100 | 6 | 0 | 0 | 0 |
| $^{192}$Ir | 0 | 8 | 1 | 4 | 100 | 0 | 0 | 0 |
| $^{204}$Tl | 0 | 0 | 2 | 3 | 0 | 100 | 4 | 2 |
| $^{226}$Ra | 0 | 4 | 0 | 0 | 0 | 0 | 100 | 0 |
| $^{241}$Am | 2 | 0 | 10 | 6 | 4 | 30 | 4 | 100 |
| Unidentified | 0 | 1 | 0 | 0 | 0 | 0 | 0 | 0 |

Table 10. Results on the dataset containing spectra with 100 events (not used for training), using a network with four convolutional blocks.

Generalization in the case of several isotopes

If the number of isotopes to be identified were to be expanded, the only modification in the architecture would consist in increasing the number of neurons in the completely connected layers of classification and regression. Additionally, the corresponding spectra should be added to the dataset, both individually and combined with others. The complexity would increase as some isotopes might have spectral lines similar to others and so on. Even though all this is possible, it should be pointed out that it is not strictly necessary to train a network with every possible isotope since, depending on the application of the gamma sensor used, some isotopes would never actually be used. On the other hand, it is more convenient to train networks aimed at the final application. In the more complex applications, the number of isotopes rarely exceeds 20, positioning the method of the present invention at a good stage.

Further details on the experimental tests

A first version of the invention was tested on spectra of four isotopes ($^{57}$Co, $^{109}$Cd, $^{133}$Ba, $^{241}$Am) measured by a CdZnTe detector, with an energy resolution of 3% at 662 keV. The network was trained with spectra with $10^2$ and $10^3$ events. In the case of only one isotope, the network achieves an accuracy of 1000 on spectra not used for training. Such spectra have a statistically insufficient number of events for applying standard algorithms.

A second version was tested on simulated spectra of eight isotopes used in the industrial field ($^{57}$Co, $^{60}$Co, $^{133}$Ba, $^{137}$Cs, $^{192}$Ir, $^{204}$Tl, $^{226}$Ra, $^{241}$Am) . The network was trained with spectra of $10^{3\text{-}4\text{-}5}$ events. Also in this case, on spectra with a single isotope, there is 100% accuracy, irrespective of the statistics. Furthermore, high performance (98,5%) is also obtained on spectra with $10^2$ events (not used for training): the network proved to be able to generalize what it learned (see sections above). The network was also tested on spectra with several isotopes at 1:1, 3:1, 1:3 and 1:1:1 ratio with different statistics ($2\cdot10^{3\text{-}4\text{-}5}$, $4\cdot10^{3\text{-}4\text{-}5}$ and $3\cdot10^{3\text{-}4\text{-}5}$, respectively) and for each possible combination. The network only detects the isotopes present and estimates the fraction thereof. The TRL (Technology Readiness Level) is 4 (*Technology validated in lab*).

Generalization in the case of shielded sources

In the case of the presence of a material between the radioactive source and the detector, it attenuates the gamma rays, to a greater extent with low energies and to a lesser extent with high energies, distorting the spectrum. This is not a problem for identification as it is the presence of a determined attribute which determines the isotope, not the intensity thereof. However, quantification would be more complicated. Even though the accuracy would certainly worsen, by introducing the spectra related to the same isotopes under various conditions of attenuation in the dataset it would still be possible to estimate the relative fractions.

Thus, the architecture of the present invention would not experience variations.

Furthermore, during a gamma radiation measurement, a natural background radiation is always present, to a greater or lesser extent depending on the place (open, closed environment, etc.). Such a radiation is weak, but in the case of long measurements, it can give a not negligible contribution in the spectrum measured. The nature of such a radiation is generally known (it is a mixture of naturally-occurring radioactive isotopes). Therefore, it is possible to add a further class to the method of the invention (i.e. a further neuron to the completely connected layers) the task of which is to estimate the fraction of the background radiation, which is thus effectively treated as a radioisotope and thus assessed for the purpose of classification of the isotopes of interest.

Main fields of application

There are substantially four fields in which the recognition of isotopes finds application (medical, industrial, environmental and nuclear) and the list of most commonly used isotopes is defined for each one of these.

As discussed above, it is possible to identify any radioisotope instead of creating an *ad hoc* network for each category. Furthermore, it is possible to manage different conditions (presence of shielding materials, scattering sources).

Although the invention was initially developed for detectors of gamma rays in the solid state with low resolution (CdTe, CdZnTe), it remains valid for detectors based on different technologies, such as scintillators, the market for which is much broader than the first ones. Having low costs and well-established stability and efficiency, scintillators are the perfect instrument for manufacturing portable devices for the automatic identification of radioisotopes. However, having limited performance in terms of energy resolution, the main obstacle to the use thereof in this field is the performance of the analysis algorithms. The applicability of the invention to this type of already marketed instruments increases the potential interest thereof.

**Advantages of the invention**

By virtue of the method according to the invention:

- it is possible to carry out both the identification/recognition of the isotopes present in a $\gamma$ spectrum and the quantification of the relative fraction of each one of them;
- the spectra needed to train the neural network can be obtained by means of simulations, it is not necessary to acquire experimental measurements;
- the following is obtained:

    ▪ a limited number of parameters (training requires a few minutes on a standard laptop);
    ▪ an improved efficacy in capturing the relevant information, even in distorted and/or noisy spectra; and
    ▪ a single process: from the spectrum acquired by the instrument, the relative fraction of the isotopes forming it is obtained directly and quickly.

By virtue of the method of the invention, superior performance is obtained as compared to the current methods applied to noisy spectra (*early detection*), as well as the unprecedented ability to quantify the relative fraction of each isotope without intermediate steps.

The method of training the expert algorithm applied according to the invention is very quick even on a normal laptop with a single CPU (~20 minutes), without using *cloud computing* or *GPU*. The method is ideal for portable or *hand-held* devices, in which the energy consumption and computational load are to be taken into consideration. The dataset to be used for training can be obtained both by means of experimental measurements and simulations (preferable and most commonly used method since access to radioactive sources is limited). In the second case, the modeling of the response function of the detection system is a mandatory step and can be considered a disadvantage (which is also common to other methods). However, the insensitivity of CNNs to slight distortions allows a certain tolerance in the accuracy of such simulations.

According to the invention, it is not necessary to perform: 1) smoothing of the spectrum 2) decomposition in wavelet 3) analysis of features previously extracted with the neural network as in some methods of the prior art, only one step of parallel recognition and quantification is carried out starting directly from the spectrum measured as input of the network.

Parallelism of the two analyses is ensured by a directed acyclic graph (DAG).

**References**

1. Monterial, M., Nelson, K. E., Labov, S. E. & Sangiorgio, S. Benchmarking Algorithm for Radio Nuclide Identification (BARNI) Literature Review. (2019). doi:10.2172/1544518

2. Liang, D. et al. Rapid nuclide identification algorithm based on convolutional neural network. Ann. Nucl. Energy 133, 483-490 (2019)

3. Kamuda, M. & Sullivan, C. J. An automated isotope identification and quantification algorithm for isotope mixtures in low-resolution gamma-ray spectra. Radiat. Phys. Chem. 155, 281-286 (2019)

4. Kamuda, M., Stinnett, J. & Sullivan, C. J. Automated Isotope Identification Algorithm Using Artificial Neural Networks. IEEE Trans. Nucl. Sci. 64, 1858-1864 (2017).

5. Chen, L. & Wei, Y. X. Nuclide identification algorithm based on K-L transform and neural networks. Nucl. Instruments Methods Phys. Res. Sect. A Accel. Spectrometers, Detect. Assoc. Equip. 598, 450-453 (2009).

6. "System and method for resolving gamma-ray spectra", USA Patent US 7711661 B2, 2010.

7. "System and Method for Making Nuclear Radiation Detection Decisions and/or Radionuclide Identification Classifications", US20190034786A1, 2017.

8. "Apparatus and method for identifying multi-radioisotope based on plastic scintillator using Artificial Neural Network", KR102051576B1, 2018.

9. "A kind of gamma-ray spectrum analysis method based on approximation coefficient and deep learning", CN107229787A, 2017.

10. KAMUDA MARK ET AL: "A comparison of machine learning methods for automated gamma-ray spectroscopy", NUCLEAR INSTRUMENTS & METHODS IN PHYSICS RESEARCH. SECTION A, ELSEVIER BV * NORTH-HOLLAND, NL, vol. 954, 19 October 2018.

Preferred embodiments were described above, and variants of the present invention were suggested, but it is understood that are given by way of example only, the scope of protection being defined by the appended claims.

**Claims**

1. A computer-implemented method for the automatic identification and quantification of radioisotopes in gamma spectra, comprising the following steps:

    A. providing a convolutional neural network;
    B. training the convolutional neural network on a training dataset consisting of gamma spectra images and a number of isotopes present in each of said gamma spectra images, thus obtaining a trained convolutional neural network;
    C. inputting an image of a gamma spectrum to said trained convolutional neural network; and
    D. obtaining, at the output from said trained convolutional neural network, a classification datum for each of a predetermined number N of radioisotopes which are identifiable in said gamma spectrum image, with N being an integer greater than zero, and a quantification datum for each of the N identifiable radioisotopes;
    wherein the convolutional neural network comprises the following subsequent blocks completely connected in an acyclic graph:

    - an input neuron layer;
    - one or more concatenated convolutional blocks, each with a respective activation function;
    - a bifurcation at the output of said one or more concatenated convolutional blocks, which includes:

        ▪ a first branch with a classification neural network of the identifiable radioisotopes with a predetermined number of input neurons and a number of output neurons equal to N, the classification neural network being configured to linearly combine the input data, and apply a first non-linear activation function to the linearly combined data for each of the output neurons;
        ▪ a second branch with a quantification neural network with a predetermined number of input neurons and a number of output neurons equal to N, the quantification neural network being configured to linearly combine the input data, apply a second linear activation function to the linearly combined data for each of the output neurons, and output a quantification coefficient for each of the N identifiable isotopes;

    the outputs of said first and said second branches being concatenated so as to provide a vector with a number of components equal to 2N with the first N components having values corresponding to identifiable radioisotopes and the second N components having values equal to the corresponding normalized quantification coefficients, a first cost function being applied to the output of the first branch of the bifurcation and a second cost function to the output of the second branch of the bifurcation, the values of the first and second cost functions applied being combined at the output of the neural network to obtain a single cost value to be minimized.

2. A method according to claim 1, wherein said single cost value to be minimized is the sum of the first and second cost functions applied to the two bifurcation branches, respectively.

3. A method according to claim 1 or 2, wherein the first cost function is a cross entropy loss function followed by a sigmoidal function and the second cost function is a sum of the square differences.

4. A method according to any of claims 1 to 3, wherein a dropout layer is provided before the bifurcation, which is configured to randomly turn off, at each iteration during step B, a predetermined percentage of neurons of the convolutional neural network.

5. A method according to any of claims 1 to 4, wherein at least two convolutional blocks are provided in the convolutional neural network.

6. A method according to any of claims 1 to 5, wherein said respective activation function is an exponential linear unit.

7. A method according to any of claims 1 to 6, wherein, a batch normalization is performed in each of said one or more convolutional blocks.

8. A method according to any of claims 1 to 7, wherein, at the end of step D, the identifiable radioisotopes having a lower classification datum than a predetermined threshold are discarded.

9. A computer program comprising instructions which, when the program is executed by a computer, cause the computer to carry out the method according to any of claims 1 to 8.

**Patentansprüche**

1. Computerimplementiertes Verfahren zur automatischen Identifizierung und Quantifizierung von Radioisotopen in Gammaspektren, umfassend die folgenden Schritte:

   A. Bereitstellen eines faltenden neuronalen Netzes;
   B. Trainieren des faltenden neuronalen Netzes anhand eines Trainingsdatensatzes, der aus Gammaspektrenbildern und einer Anzahl von Isotopen besteht, die in jedem der Gammaspektrenbilder vorhanden sind, wodurch ein trainiertes faltendes neuronales Netz erhalten wird;
   C. Eingeben eines Bildes eines Gammaspektrums in das trainierte faltende neuronale Netz; und
   D. Erhalten, am Ausgang des trainierten faltenden neuronalen Netzes, eines Klassifizierungsbezugspunkts für jedes einer vorgegebenen Anzahl N von Radioisotopen, die in dem Gammaspektrumbild identifizierbar sind, wobei N eine ganze Zahl größer als null ist, und eines Quantifizierungsbezugspunkts für jedes der N identifizierbaren Radioisotope;
   wobei das faltende neuronale Netz die folgenden aufeinanderfolgenden Blöcke umfasst, die vollständig in einem azyklischen Graphen verbunden sind:

   - eine Eingangsneuronenschicht;
   - ein oder mehrere verkettete Faltungsblöcke, jeder mit einer jeweiligen Aktivierungsfunktion;
   - eine Verzweigung am Ausgang des einen oder der mehreren verketteten Faltungsblöcke, die einschließt:

     ▪ einen ersten Zweig mit einem neuronalen Klassifizierungsnetz der identifizierbaren Radioisotope mit einer vorgegebenen Anzahl von Eingangsneuronen und einer Anzahl von Ausgangsneuronen gleich N, wobei das neuronale Klassifizierungsnetz so konfiguriert ist, dass es die Eingangsdaten linear kombiniert und eine erste nichtlineare Aktivierungsfunktion auf die linear kombinierten Daten für jedes der Ausgangsneuronen anwendet;
     ▪ einen zweiten Zweig mit einem quantifizierenden neuronalen Netz mit einer vorgegebenen Anzahl von Eingangsneuronen und einer Anzahl von Ausgangsneuronen gleich N, wobei das quantifizierende neuronale Netz so konfiguriert ist, dass es die Eingangsdaten linear kombiniert und eine zweite lineare Aktivierungsfunktion auf die linear kombinierten Daten für jedes der Ausgangsneuronen anwendet und einen Quantifizierungskoeffizienten für jedes der N identifizierbaren Isotope ausgibt;

wobei die Ausgaben des ersten und des zweiten Zweigs verkettet werden, um einen Vektor mit einer Anzahl von Komponenten gleich 2N bereitzustellen, wobei die ersten N Komponenten Werte aufweisen, die identifizierbaren Radioisotopen entsprechen, und die zweiten N Komponenten Werte aufweisen, die den entsprechenden normalisierten Quantifizierungskoeffizienten entsprechen, wobei eine erste Kostenfunktion auf den Ausgang des ersten Zweigs der Verzweigung und eine zweite Kostenfunktion auf den Ausgang des zweiten Zweigs der Verzweigung angewendet werden, wobei die Werte der ersten und der zweiten angewendeten Kostenfunktion am Ausgang des neuronalen Netzes kombiniert werden, um einen einzigen Kostenwert zu erhalten, der minimiert werden soll.

2. Verfahren nach Anspruch 1, wobei der zu minimierende einzige Kostenwert die Summe der ersten und der zweiten Kostenfunktion ist, die jeweils auf die beiden Verzweigungszweige angewendet werden.

3. Verfahren nach Anspruch 1 oder 2, wobei die erste Kostenfunktion eine Kreuzentropieverlustfunktion ist, gefolgt von einer Sigmoid-Funktion, und die zweite Kostenfunktion eine Summe der quadratischen Differenzen ist.

4. Verfahren nach einem der Ansprüche 1 bis 3, wobei vor der Verzweigung eine Dropout-Schicht bereitgestellt wird, die so konfiguriert ist, dass sie bei jeder Iteration während Schritt B einen vorgegebenen Prozentsatz von Neuronen des faltenden neuronalen Netzes zufällig abschaltet.

5. Verfahren nach einem der Ansprüche 1 bis 4, wobei in dem faltenden neuronalen Netz mindestens zwei Faltungsblöcke bereitgestellt werden.

6. Verfahren nach einem der Ansprüche 1 bis 5, wobei die jeweilige Aktivierungsfunktion eine exponentielle lineare Einheit ist.

7. Verfahren nach einem der Ansprüche 1 bis 6, wobei in jedem des einen oder der mehreren Faltungsblöcke eine Stapelnormalisierung durchgeführt wird.

8. Verfahren nach einem der Ansprüche 1 bis 7, wobei am Ende von Schritt D die identifizierbaren Radioisotope mit einem niedrigeren Klassifizierungsbezugspunkt als einem vorgegebenen Schwellenwert verworfen werden.

9. Computerprogramm, umfassend Anweisungen, die bei Ausführung des Programms durch einen Computer bewirken, dass der Computer die Schritte des Verfahrens nach einem der Ansprüche 1 bis 8 ausführt.

**Revendications**

1. Procédé à implémentation informatique d'identification et de quantification automatiques de radio-isotopes dans des spectres gamma, comprenant les étapes suivantes :

A. la fourniture d'un réseau neuronal convolutif ;
B. l'entraînement du réseau neuronal convolutif sur un ensemble de données d'entraînement constitué d'images de spectre gamma et d'un certain nombre d'isotopes présents dans chacune desdites images de spectre gamma, ce qui permet d'obtenir un réseau neuronal convolutif entraîné ;
C. l'entrée d'une image d'un spectre gamma dans ledit réseau neuronal convolutif entraîné ; et
D. l'obtention, en sortie dudit réseau neuronal convolutif entraîné, d'une donnée de classification pour chaque radio-isotope d'un nombre N de radio-isotopes qui sont identifiables dans ladite image de spectre gamma, N représentant un entier supérieur à zéro, et d'une donnée de quantification pour chacun des N radio-isotopes identifiables ;
dans lequel le réseau neuronal convolutif comprend les blocs ultérieurs suivants, complètement connectés dans un graphe acyclique :

- une couche de neurones d'entrée ;
- un ou plusieurs blocs convolutifs concaténés, chacun présentant une fonction d'activation respective ;
- une bifurcation en sortie dudit ou desdits blocs convolutifs concaténés, qui comporte :

- une première branche contenant un réseau neuronal de classification des radio-isotopes identifiables contenant un nombre prédéterminé de neurones d'entrée et un nombre N de neurones de sortie, le réseau neuronal de classification étant configuré pour combiner linéairement les données d'entrée et pour appliquer une première fonction d'activation non linéaire aux données combinées linéairement pour chacun des neurones de sortie ;

- une seconde branche contenant un réseau neuronal de quantification contenant un nombre prédéterminé de neurones d'entrée et un nombre N de neurones de sortie, le réseau neuronal de quantification étant configuré pour combiner linéairement les données d'entrée, appliquer une seconde fonction d'activation linéaire aux données combinées linéairement pour chacun des neurones de sortie et transmettre un coefficient de quantification pour chacun des N isotopes identifiables ;

les sorties desdites première et seconde branches étant concaténées pour fournir un vecteur contenant un nombre 2N de composantes contenant les N premières composantes, dont les valeurs correspondent à des radio-isotopes identifiables, et les N secondes composantes, dont les valeurs sont égales aux coefficients de quantification normalisés correspondants, une première fonction de coût étant appliquée en sortie de la première branche de la bifurcation et une seconde fonction de coût en sortie de la seconde branche de la bifurcation, les valeurs des première et seconde fonctions de coût appliquées étant combinées en sortie du réseau neuronal pour obtenir une valeur de coût unique à réduire à un minimum.

2. Procédé selon la revendication 1, dans lequel ladite valeur de coût unique à réduire à un minimum est la somme des première et seconde fonctions de coût appliquées respectivement aux deux branches de bifurcation.

3. Procédé selon la revendication 1 ou 2, dans lequel la première fonction de coût est une fonction croisée de perte d'entropie suivie d'une fonction sigmoïde et la seconde fonction de coût est une somme des différences au carré.

4. Procédé selon l'une quelconque des revendications 1 à 3, dans lequel une couche de décrochage est présente avant la bifurcation et configurée pour désactiver aléatoirement, à chaque itération lors de l'étape B, un pourcentage prédéterminé de neurones du réseau neuronal convolutif.

5. Procédé selon l'une quelconque des revendications 1 à 4, dans lequel au moins deux blocs convolutifs sont présents dans le réseau neuronal convolutif.

6. Procédé selon l'une quelconque des revendications 1 à 5, dans lequel ladite fonction d'activation respective est une unité linéaire exponentielle.

7. Procédé selon l'une quelconque des revendications 1 à 6, dans lequel une normalisation par lots est effectuée dans chacun dudit ou desdits blocs convolutifs.

8. Procédé selon l'une quelconque des revendications 1 à 7, dans lequel, en fin d'étape D, les radio-isotopes identifiables, dont une donnée de classification est inférieure à un seuil prédéterminé, sont écartés.

9. Programme informatique comprenant des instructions qui, lorsque le programme est exécuté par un ordinateur, amènent l'ordinateur à exécuter le procédé selon l'une quelconque des revendications 1 à 8.

FIG.1
(PRIOR ART)

FIG.2
(PRIOR ART)

# FIG.3
(PRIOR ART)

# FIG.4
(PRIOR ART)

FIG.5

FIG.6

FIG.7

FIG.8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7711661 B2
- US 20190034786 A1
- KR 102051576 B1
- CN 107229787 A

**Non-patent literature cited in the description**

- **MONTERIAL, M. ; NELSON, K. E ; LABOV, S. E ; SANGIORGIO, S.** *Benchmarking Algorithm for Radio Nuclide Identification (BARNI) Literature Review,* 2019
- **LIANG, D et al.** Rapid nuclide identification algorithm based on convolutional neural network. *Ann. Nucl. Energy,* 2019, vol. 133, 483-490
- **KAMUDA, M ; SULLIVAN, C. J.** An automated isotope identification and quantification algorithm for isotope mixtures in low-resolution gamma-ray spectra. *Radiat. Phys. Chem,* 2019, vol. 155, 281-286
- **KAMUDA, M. ; STINNETT, J ; SULLIVAN, C. J.** Automated Isotope Identification Algorithm Using Artificial Neural Networks. *IEEE Trans. Nucl. Sci,* 2017, vol. 64, 1858-1864
- **CHEN, L. ; WEI, Y. X.** Nuclide identification algorithm based on K-L transform and neural networks. Nucl. *Instruments Methods Phys. Res. Sect. A Accel. Spectrometers, Detect. Assoc. Equip,* 2009, vol. 598, 450-453
- A comparison of machine learning methods for automated gamma-ray spectroscopy. **KAMUDA MARK et al.** NUCLEAR INSTRUMENTS & METHODS IN PHYSICS RESEARCH. SECTION A. ELSEVIER BV, 19 October 2018, vol. 954